# FASCICULE DE BREVET EUROPEEN

(11) **EP 2 417 013 B1**
(45) Date de publication et mention de la délivrance du brevet: **30.10.2013**
(21) Numéro de dépôt: 10713214.4
(22) Date de dépôt: 09.04.2010
(51) Int. Cl.: B63B 35/70

(54) **MODULE INDEPENDENT DE PRODUCTION D'ENERGIE POUR UN NAVIRE ET ENSEMBLE DE NAVIRE ASSOCIE**
UNABHÄNGIGER MODUL FÜR DIE ENERGIEPRODUKTION EINES SCHIFFES UND KOMBINATION VON MODUL UND SCHIFF
INDEPENDENT MODULE FOR PRODUCING ENERGY FOR A MARINE VESSE AND COMBINATION OF MODULE AND VESSEL

(30) Priorité: 10.04.2009 FR 0952408
(43) Date de publication de la demande: 15.02.2012
(73) Titulaire: STX FRANCE S.A., 44600 Saint Nazaire (FR)
(72) Inventeur: LORANG, Matthieu, 44320 Saint Pere En Retz (FR)
(74) Mandataire: Regimbeau
(86) Numéro de dépôt international: PCT/EP2010/054696
(87) Numéro de publication internationale: WO 2010/115977

(56) Documents cités:
- DE-C- 314 095
- JP-A- 60 035 686
- NL-A- 8 502 841
- US-A- 3 934 531

## Description

La présente invention concerne les systèmes d'alimentation en énergie permettant de fournir de l'énergie à un navire. Plus particulièrement, l'invention se rapporte aux modules de production d'énergie adaptés pour être connectés à un navire afin de leur fournir l'énergie nécessaire à leur propulsion et à leur fonctionnement.

De nos jours, de nombreux navires comportent des moyens de propulsion alimentés par une centrale de production d'énergie. La plupart du temps, une telle centrale est montée fixement sur le navire lui-même.
Il peut être avantageux cependant, selon le type de navire ou de centrale de production, que la centrale soit dissociable du navire, notamment dans le cas des navires à propulsion nucléaire. En effet, l'utilisation de l'énergie nucléaire peut entraîner d'importantes contraintes, comme l'interdiction d'accès à certains ports, l'immobilisation longue du navire lors de la maintenance de la centrale ou de son rechargement en combustibles, etc.
Il a donc été proposé des centrales de production d'énergie montées sur un navire indépendant.
Ainsi, le document WO 01/49562 propose un ensemble de navires composé notamment d'une barge et d'un navire pousseur muni de moyens de propulsion alimentés par une centrale de production d'énergie. La partie arrière de la barge est complémentaire de forme de la partie avant du navire pousseur afin de permettre une interconnexion mécanique, de sorte que ladite barge est poussée et déplacée par le navire pousseur. Une limitation de cette solution est qu'elle ne permet pas à la barge de se mouvoir indépendamment de son pousseur. En outre, la taille d'un tel ensemble de navires est généralement limitée, notamment à cause de la dissipation d'énergie au niveau de l'interconnexion mécanique.
Il a également été proposé dans le document GB 949 654 de mettre en oeuvre un ensemble de navires dissociables comprenant un navire d'alimentation en énergie et au moins un navire satellite, chacun étant muni de moyens de propulsion propres. L'énergie produite par le navire d'alimentation est transférée au navire satellite par l'intermédiaire de câbles électriques, autorisant une indépendance relative des navires composant l'ensemble.
Chaque navire satellite comporte en outre une centrale de production d'énergie annexe lui permettant de se détacher temporairement du navire d'alimentation, et peut être un sous-marin ou un bateau de grande taille.
Néanmoins, le déplacement lié du navire d'alimentation et du ou des navires satellites peut être compliqué, par exemple lorsque les conditions météorologiques sont mauvaises, et rendre difficile la mise en oeuvre du transfert d'énergie. De plus, l'énergie nécessaire au déplacement du navire d'alimentation et du navire satellite est supérieure à l'énergie nécessaire au déplacement d'un navire unique.

L'invention vise donc à pallier ces difficultés posées par l'art antérieur.
Pour cela, l'invention propose un module dissociable de production d'énergie d'un navire, capable de fournir au navire l'énergie nécessaire à sa propulsion, qui puisse être adapté à tout type de navire, et en particulier à des navires de grande taille tels que les cargos, les porte-conteneurs ou les navires à passagers.
L'invention a également comme objectif de proposer un module dissociable de production d'énergie d'un navire permettant un transfert d'énergie simple et sûr en toutes circonstances, notamment lorsque les conditions météorologiques sont difficiles.

Ainsi, selon un premier aspect, l'invention propose un module de production d'énergie électrique pour un navire principal pouvant fournir l'énergie nécessaire à la propulsion dudit navire principal,
■ le module étant réalisé sous la forme d'un navire secondaire indépendant du navire principal et comprenant une centrale de production d'énergie,
■ le navire secondaire étant muni de moyens de raccordement électrique pour établir une connexion électrique entre la centrale et le navire principal et de moyens de verrouillage au navire principal pour le rendre solidaire en déplacement dudit navire principal,
   dans lequel les moyens de raccordement électrique sont adaptés pour alimenter en énergie électrique des moyens de propulsion du navire principal.
Certains aspects préférés mais non limitatifs du module de production d'énergie selon l'invention sont les suivants :
- le navire secondaire comporte en outre des moyens de propulsion lui permettant de se déplacer indépendamment du navire principal ; et
- la centrale de production d'énergie est une centrale nucléaire, une centrale au gaz ou une centrale à hydrogène.
Selon un deuxième aspect, l'invention propose un ensemble de navires comprenant un navire principal et un navire secondaire, ledit navire secondaire étant un module conforme à l'invention, le navire principal comportant des moyens pour recevoir le navire secondaire.
Certains aspects préférés mais non limitatifs de l'ensemble de navires selon l'invention sont les suivants :
- les moyens pour recevoir le navire secondaire sont localisés dans une partie arrière ou latérale du navire principal ;
- le navire principal comporte un réceptacle dont la forme est complémentaire de la forme du navire secondaire, de sorte que lorsque les moyens de verrouillage verrouillent le navire secondaire sur le navire principal, le navire secondaire ne présente pas de surface s'opposant à l'avancement de l'ensemble de navire ;

- lorsque les moyens de verrouillage verrouillent le navire secondaire sur le navire principal, le navire secondaire reste à flot ;
- les moyens de verrouillage des navire principal et secondaire sont configurés pour que lorsque les moyens de verrouillage verrouillent le navire secondaire sur le navire principal, le navire secondaire est tracté par le navire principal ;
- le navire principal comporte un radier lui permettant de recevoir le navire secondaire dans un espace interne ; et
- le navire principal comporte une centrale annexe de production d'énergie destinée à alimenter les moyens de propulsion du navire principal en configuration de relâche, les performances de propulsion étant alors sensiblement moins élevées que lorsque lesdits moyens de propulsion du navire principal sont alimentés par la centrale du navire secondaire.

D'autres caractéristiques, buts et avantages apparaîtront mieux à la lecture de la description détaillée qui va suivre, et en regard des dessins annexés donnés à titre d'exemples non limitatifs et sur lesquels :
- la figure 1 est une vue du dessus en coupe d'une première forme de réalisation d'un ensemble de navires conforme à l'invention en configuration de route ;
- la figure 2 est une vue du dessus en coupe de la première forme de réalisation d'un ensemble de navires conforme à l'invention en configuration de relâche ;
- la figure 3 est une vue du dessus en coupe d'une deuxième forme de réalisation d'un ensemble de navires conforme à l'invention en configuration de route ;
- la figure 4 est une vue du dessus en coupe de la deuxième forme de réalisation d'un ensemble de navires conforme à l'invention en configuration de relâche.

La présente invention peut trouver application sur tout type de navire. L'invention est néanmoins particulièrement avantageuse pour les navires de grande taille du type cargo, porte-conteneurs, navires militaires les bateaux de croisière ou encore les ferries.
Un module de production d'énergie 2 selon l'invention comporte une centrale de production d'énergie 3 pouvant fournir l'énergie nécessaire à la propulsion d'un navire 1, dit navire principal.
La puissance et le type de la centrale de production d'énergie 3 sont adaptés aux besoins du navire principal 1 auquel elle transfère de l'énergie. Par exemple, la centrale de production d'énergie 1 peut être une centrale nucléaire dans le cas où le navire principal 1 est un navire de grande taille tel qu'un cargo.
En variante, la centrale peut être une centrale au gaz, une centrale à hydrogène ou toute autre source d'énergie.
Le module de production d'énergie 2 est réalisé sous la forme d'un navire, dit navire secondaire 2, indépendant du navire principal 1, et est muni de moyens de raccordement électrique 7 pour établir une connexion électrique entre la centrale de production d'énergie 3 et le navire principal 1, afin d'alimenter en énergie électrique des moyens de propulsion 4 du navire principal 1.
Avantageusement, le navire secondaire 2 est de petite taille.
Typiquement, il est de plus petite taille que le navire principal 1, et peut ainsi avoir une longueur comprise entre environ un dixième et environ un cinquième de la longueur du navire principal.
De manière optionnelle, le navire secondaire 2 peut également comporter des moyens de propulsion 5 lui permettant de se déplacer de manière autonome, notamment lorsque celui-ci n'est connecté à aucun navire principal. La centrale 3 du navire secondaire 2 n'alimente alors en énergie que ses propres moyens de propulsion 5.

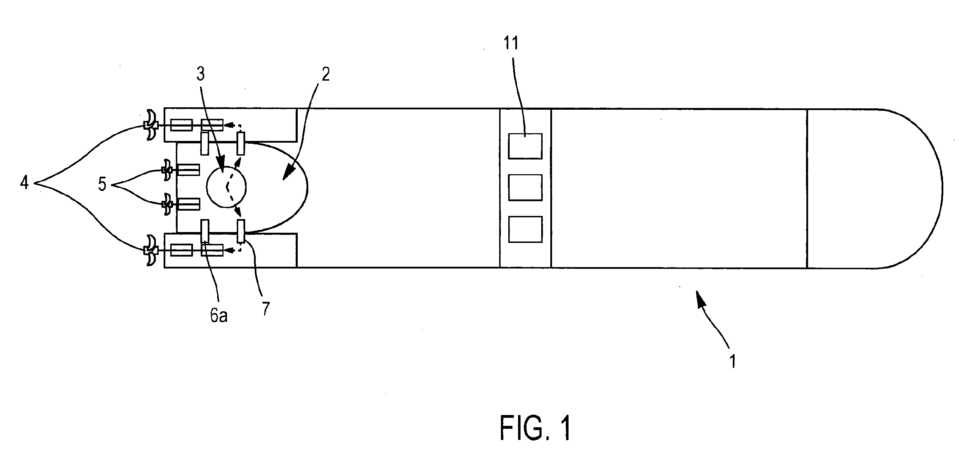

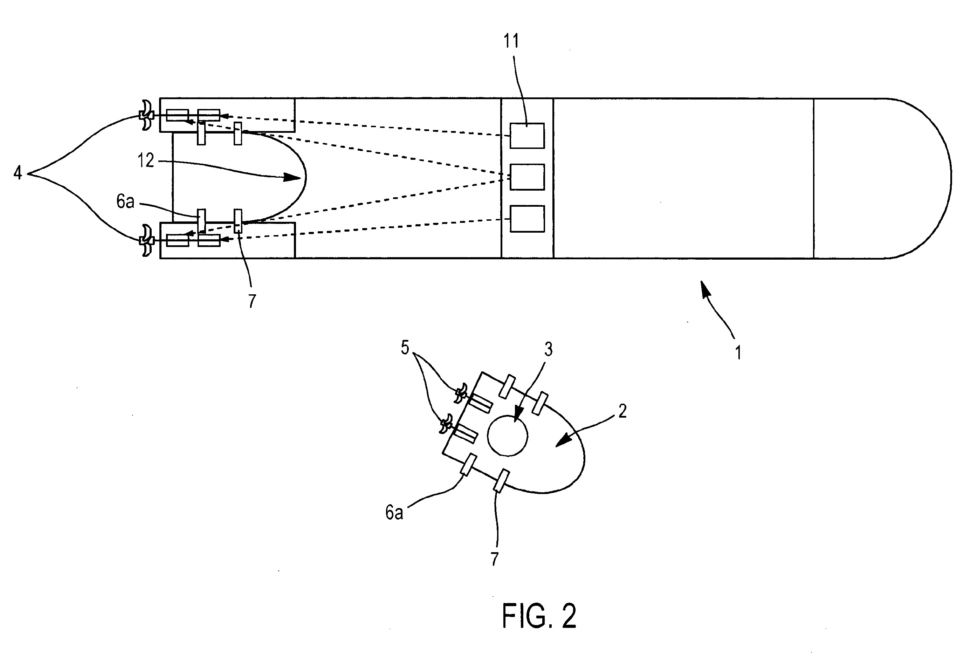

On notera cependant que les moyens de propulsion 5 du navire secondaire 2 ne sont pas adaptés pour déplacer le navire principal 1 : le navire secondaire 2 n'est en effet pas destiné à pousser ou tracter le navire principal 1, mais uniquement à lui fournir l'énergie nécessaire à ses moyens de propulsion 4.
En l'absence de moyens de propulsion 5, le navire secondaire 2 se déplace à l'aide d'un ou plusieurs remorqueurs lorsqu'il n'est connecté à aucun navire principal 1.
Par ailleurs, le navire secondaire 2 et le navire principal 1 comprennent des moyens de verrouillage complémentaires 6a, 6b, permettant de rendre le navire secondaire 2 solidaire en déplacement du navire principal 1, de sorte que le déplacement du navire principal 1 entraîne le déplacement du navire secondaire 2.
Selon une première forme de réalisation, illustrée en figure 1, les moyens de verrouillage 6a permettent de fixer rigidement et solidairement le navire secondaire 2 au navire principal 1. Cette connexion peut être réalisée dans toute partie du navire 1, par exemple en partie arrière ou latérale du navire principal 1. Les moyens de verrouillage 6a comprennent alors des moyens de connexion mécanique disposés dans la partie arrière (respectivement latérale) du navire principal.
Par exemple, la forme d'une partie avant du navire secondaire 2 est complémentaire de la forme de la partie arrière du navire principal 1.
De telles formes complémentaires peuvent notamment être une cavité femelle et une proéminence mâle disposées respectivement dans la partie arrière du navire principal 1 et la partie avant du navire secondaire 2, ou réciproquement.
En variante, comme illustré sur les figures 1 et 2, le navire principal 1 comporte un réceptacle 12 qui peut notamment être agencé dans la partie arrière (respectivement latérale) qui est complémentaire de la forme globale du navire secondaire 2, de sorte que le navire secondaire 2 se trouve complètement encastré dans le navire principal 1 lors de leur association en configuration de route, comme illustré sur la figure 1, la partie arrière (respectivement latérale) du navire secondaire 2 étant disposée sensiblement dans le plan de la partie arrière (respectivement latérale) du navire principal 1. Le navire secondaire 2 forme alors une partie intégrante dudit navire principal 1.
Quelles que soient les variantes de réalisation, lorsque les moyens de connexion mécanique 6a entre les navires sont connectés, le navire principal 1 et le navire secondaire 2 sont rigidement solidaires et forment un ensemble de navire unique se déplaçant conjointement.
Le navire secondaire 2 étant de plus petite taille que le navire principal 1, lorsqu'il est verrouillé au navire principal, le navire secondaire 2 ne présente (de préférence) pas de surface s'opposant à l'avancement de l'ensemble de navires, et ne génère donc que de faibles efforts mécaniques au niveau de la connexion 6a avec le navire principal 1.
Par ailleurs, le navire secondaire 2 reste de préférence à flot lorsqu'il est verrouillé sur le navire principal 1. Ainsi, le navire secondaire 2 peut, au cours des déplacements, réduire les efforts exercés sur les moyens de verrouillage 6a en utilisant partiellement l'énergie produite par la centrale 3 pour mettre en oeuvre ses propres moyens de propulsion 5. Ceci ne signifie en revanche pas que le navire secondaire 2 joue le rôle de propulseur et/ou de tracteur du navire principal 1, puisque, on le rappelle, les moyens de propulsion 5 du navire secondaire 2 ne sont pas adaptés à une telle opération.
Enfin, dans cette forme de réalisation, les moyens de raccordement électrique 7 peuvent par exemple être agencés sur les parties arrière et avant des navires principal 1 et secondaire 2 respectivement, de manière à établir la connexion électrique entre la centrale 3 du navire secondaire 2 et le navire principal 1.
Cette position des moyens de raccordement 7 n'est pas limitative. Ces moyens 7 peuvent en variante être agencés sur une partie supérieure du navire secondaire 2 et une partie complémentaire du navire principal 1, ou en tout autre endroit adapté des deux navires 1 et 2.
De même, les moyens de verrouillage peuvent être disposés en différents endroits des navires principal 1 et secondaire 2, et être en plus ou moins grand nombre selon la taille respective des navires 1 et 2, le type de moyens de verrouillage, etc.

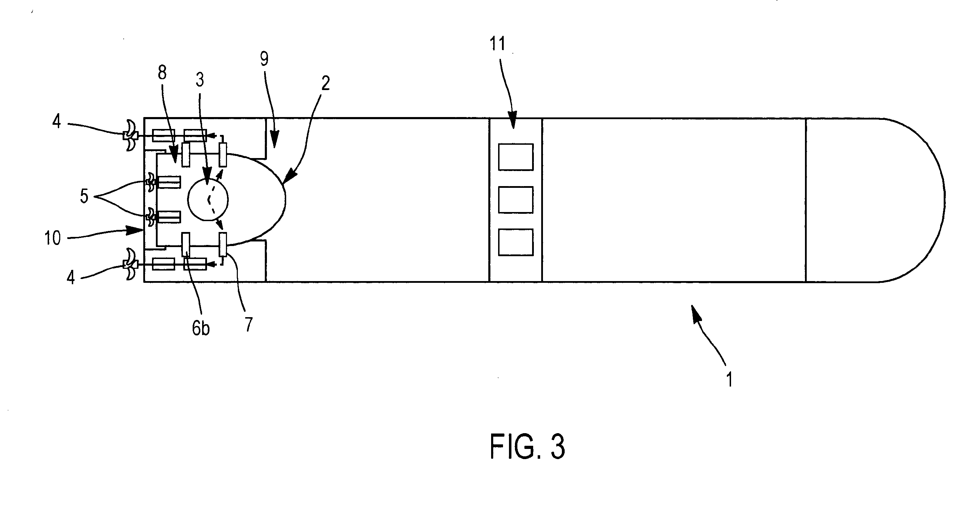

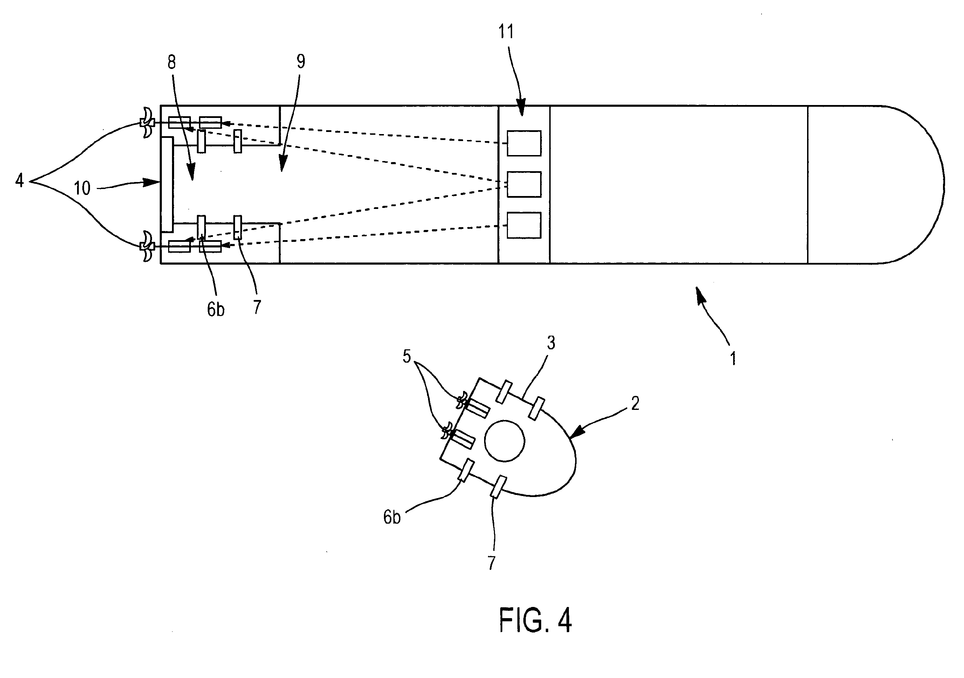

Selon une autre forme de réalisation, illustrée sur les figures 3 et 4, le navire principal 1 comporte un radier 8 adapté pour recevoir le navire secondaire 2. Le navire secondaire 2 est alors disposé dans un espace interne 9 du navire principal 1.
Par radier on entendra ici un radier immergeable, c'est-à-dire un bassin intérieur constituant un dock flottant. La mise en eau et à sec du radier 8 permet ainsi l'enradiage et le déradiage des engins flottants à transporter, tels que le navire secondaire 2.
Pour cela, le navire principal 1 comprend une porte 10 permettant l'accès au radier 8 du navire secondaire 2. De préférence, la porte 10 et le radier 8 sont agencés dans une partie arrière du navire principal 1. Le navire secondaire 2 peut alors soit resté à flot dans le radier 8, soit être mis à sec.
En variante, la porte 10 et le radier 8 sont agencés dans une autre partie du navire principal, telle qu'une partie avant, latérale, etc.
Le radier 8 peut par exemple être muni de moyens de verrouillage 6b conventionnels assurant un maintien du navire secondaire 2 dans le radier du navire principal 1, tels qu'un système d'arrimage. Le maintien du navire secondaire 2 dans le navire principal 1 par l'intermédiaire des moyens de verrouillage 6b n'est cependant pas nécessairement rigide puisque le navire secondaire 2 est nécessairement solidaire en déplacement du navire principal 1 (étant donné qu'il est logé dans le radier 8).
Il comporte également des moyens de raccordement électrique 7 avec le navire secondaire 2 assurant la connexion électrique entre la centrale 3 du navire secondaire 2 et le navire principal 1.

A nouveau, dans ce mode de réalisation, les navires principal 1 et secondaire 2 se déplacent conjointement, le navire secondaire 2 étant porté par le navire principal 1 dans lequel il est arrimé.
Egalement, selon la présente invention, le navire principal 1 peut comporter à la fois des moyens de verrouillage 6a disposés sur sa partie arrière et des moyens de verrouillages 6b agencés dans un espace interne 9 dudit navire 1, de manière à pouvoir accueillir toutes formes de réalisation de navires secondaires. En particulier, le navire principal 1 peut accueillir un même navire secondaire 2 dans l'une ou l'autre de ces positions.
Le navire principal 1 peut en variante être connecté à plusieurs navires secondaires en même temps. Par exemple, un premier navire secondaire peut être verrouillé à la partie arrière du navire principal 1 (conformément à la première forme de réalisation illustrée sur la figure 1), tandis qu'un deuxième navire secondaire peut être disposé dans l'espace interne 9 du navire principal (conformément à la deuxième forme de réalisation illustrée sur la figure 3).

Dans tous les modes de réalisation, en configuration de route, dans laquelle le navire secondaire 2 est rigidement fixé au navire principal 1, la centrale de production d'énergie 3 alimente en énergie les moyens de propulsion 4 du navire principal.
Les moyens de propulsion 4 du navire principal 1 peuvent être des moteurs électriques destinés à être reliés électriquement aux moyens de connexion 7 en configuration de route.
En variante, les moyens de propulsion peuvent être d'un type différent, des moyens de conversion d'énergie étant alors disposés entre les moyens de propulsion 4 et les moyens de connexion électrique 7.
L'ensemble de navires formé par le navire principal 1 et le navire secondaire 2 est donc déplacé par les moyens de propulsion 4 du navire principal 1 alimenté par la centrale de production d'énergie 3 du navire secondaire 2. Par conséquent, le navire secondaire 2 est esclave en déplacement du navire principal 1.
Cette astreinte en déplacement imposée au navire secondaire 2 est notamment possible grâce au verrouillage mécanique rendant rigidement solidaire le navire secondaire 2 du navire principal 1, que ce soit selon la forme de réalisation de la figure 1 ou celle de la figure 3.
Pour permettre cela, les moyens de verrouillage 6a, 6b sont configurés de manière à être suffisamment résistants pour subir à long terme et quelles que soient les conditions météorologiques les contraintes exercées par le navire secondaire 2 lors de son déplacement par le navire principal 1.
Avantageusement, les moyens de verrouillage 6a, 6b sont adaptés aux caractéristiques respectives des navires secondaires 2 et principal 1 (forme, masse, chargement, volume, fardage, vitesse, type de trajets effectués, etc.).
Le navire principal 1 peut en outre comporter une centrale de production d'énergie annexe 11 lui permettant de naviguer indépendamment du navire secondaire 2. La centrale annexe 11, généralement moins puissante que la centrale de production d'énergie 3 du navire secondaire 2, suffit pour alimenter les moyens de propulsion 4 du navire principal lors de petits déplacements, ou en cas de panne de la centrale de production d'énergie 3, les performances de propulsion étant alors sensiblement moins élevées que lorsque lesdits moyens de propulsion 4 du navire principal 1 sont alimentés par la centrale 3 du navire secondaire 2.
La puissance et le type de centrale annexe 11 de production d'énergie à bord du navire principal 1 sont dimensionnés et adaptés aux besoins du navire principal 1 en configuration de relâche ou si une avarie rend le module de production d'énergie 2 partiellement ou totalement inexploitable. En particulier, la centrale annexe 11 n'est susceptible de servir que pour les seuls besoins de son propre réseau électrique de bord et de ses moyens de propulsion lors de petits déplacements, de déplacements à vitesse réduite, etc. Par exemple, la centrale annexe 11 est adaptée pour permettre au navire principal 1 d'entrer dans un port. Elle est également adaptée dans d'autres configurations nécessitant des performances de propulsion limitées telles que la manipulation du navire 1 ou son retour à bon port malgré une avarie sur le module de production d'énergie 2.
Par exemple, la centrale annexe 11 est une centrale au fuel telle qu'un ensemble de groupes électrogènes équipés d'un moteur diesel-alternateur. De préférence, le type de centrale annexe 11 de production d'énergie qui est installé à bord du navire principal 1 est compatible avec les moyens de propulsion 4 du navire principal 1. Dans le cas contraire, le navire principal 1 comporte en outre des moyens de conversion d'énergie entre les moyens de propulsion et la centrale annexe 11 de production du navire principal 1.
Ainsi, le navire principal 1 peut se dissocier du navire secondaire 2 si les conditions l'exigent, et naviguer de manière autonome. De telles conditions peuvent être l'entrée dans un port n'autorisant pas les centrales nucléaires, le rechargement en combustibles de la centrale 3, etc.
Par exemple, lorsque l'ensemble de navires arrive à destination ou à l'approche de côtes, le navire principal 1 peut « larguer » le navire secondaire 2 en déverrouillant les moyens de verrouillage 6a, 6b, en déconnectant les raccordements électriques 7, et le cas échéant en remettant à la mer le navire secondaire 2 par ouverture de la porte 10 du radier 8. Dans cette configuration de relâche, les navires principal 1 et secondaire 2 sont alors libres de se déplacer indépendamment l'un de l'autre.
De la sorte, en configuration de relâche, le navire principal 1 redevient un navire conventionnel propulsé par exemple au moyen de la centrale annexe 11, ce qui simplifie notamment son accès aux ports, tandis que le navire secondaire 2 devient un navire autonome.
Dans le cas par exemple d'une flotte de navires importante, la dissociation du navire principal 1 et de sa centrale de production d'énergie 3 (i.e. du navire secondaire 2) simplifie les opérations de maintenance ou de recharge de la centrale 3. Il n'est en effet plus nécessaire d'arrêter le navire principal 1, puisqu'il suffit de remplacer (par un simple échange standard) le navire secondaire 2 devant subir des opérations par un autre navire secondaire déjà opérationnel.
La propulsion autonome des navires secondaires rend d'ailleurs cet échange d'autant plus simple et rapide à effectuer, et leur permet en outre, lorsque leur centrale est par exemple une centrale au gaz, à hydrogène ou nucléaire, de se rendre dans des terminaux spécifiques de rechargement.
Enfin, le rechargement des réacteurs (nucléaire, à hydrogène, etc.) peut en outre être effectué dans des conditions de sécurité accrues et sans immobiliser le navire principal 1, puisque ce rechargement n'a plus besoin d'être mis en oeuvre alors que la centrale 3 est raccordée au navire principal 1.

## Revendications

1. Module de production d'énergie électrique pour un navire principal (1) pouvant fournir l'énergie nécessaire à la propulsion dudit navire principal (1),
■ le module étant réalisé sous la forme d'un navire secondaire (2) indépendant du navire principal (1) et comprenant une centrale de production d'énergie (3),
■ le navire secondaire (2) étant muni de moyens de raccordement électrique (7) pour établir une connexion électrique entre la centrale (3) et le navire principal (1) et de moyens de verrouillage (6a, 6b) au navire principal (1) pour le rendre solidaire en déplacement dudit navire principal (1),
**caractérisé en ce que** les moyens de raccordement électrique (7) sont adaptés pour alimenter en énergie électrique des moyens de propulsion (4) du navire principal (1).

2. Module selon la revendication précédente, **caractérisé en ce que** le navire secondaire (2) comporte en outre des moyens de propulsion (5) lui permettant de se déplacer indépendamment du navire principal (1).

3. Module selon l'une des revendications précédentes, **caractérisé en ce que** la centrale de production d'énergie (3) est une centrale nucléaire, une centrale au gaz ou une centrale à hydrogène.

4. Ensemble de navires comprenant un navire principal (1) et un navire secondaire (2), ledit navire secondaire (2) étant un module selon l'une des revendications précédentes, **caractérisé en ce que** le navire principal (1) comporte des moyens pour recevoir le navire secondaire (2).

5. Ensemble de navires selon la revendication précédente, **caractérisé en ce que** les moyens pour recevoir le navire secondaire (2) sont localisés dans une partie arrière ou latérale du navire principal (1).

6. Ensemble de navires selon l'une des revendications 4 ou 5, **caractérisé en ce que** le navire principal (1) comporte un réceptacle dont la forme est complémentaire de la forme du navire secondaire (2), de sorte que lorsque les moyens de verrouillage (6a) verrouillent le navire secondaire (2) sur le navire principal (1), le navire secondaire (2) ne présente pas de surface s'opposant à l'avancement de l'ensemble de navire.

7. Ensemble de navires selon l'une des revendications 4 à 6, **caractérisé en ce que** lorsque les moyens de verrouillage (6a) verrouillent le navire secondaire (2) sur le navire principal (1), le navire secondaire (2) reste à flot.

8. Ensemble de navires selon l'une des revendications 4 à 7, **caractérisé en ce que** les moyens de verrouillage (6a) des navire principal (1) et secondaire (2) sont configurés pour que lorsque les moyens de verrouillage (6a) verrouillent le navire secondaire (2) sur le navire principal (1), le navire secondaire (2) est tracté par le navire principal (1).

9. Ensemble de navires selon l'une des revendications 4 à 8, **caractérisé en ce que** le navire principal (1) comporte un radier (8) lui permettant de recevoir le navire secondaire (2) dans un espace interne (9).

10. Ensemble de navires selon l'une des revendications 4 à 9, **caractérisé en ce que** le navire principal (1) comporte une centrale annexe de production d'énergie (11) destinée à alimenter les moyens de propulsion (4) du navire principal (1) en configuration de relâche, de puissance plus faible que celle du navire secondaire (2).

## Patentansprüche

1. Modul zum Erzeugen elektrischer Energie für ein Hauptschiff (1), das die Energie bereitstellen kann, die für den Antrieb des Hauptschiffes (1) notwendig ist, wobei
● das Modul in Form eines Nebenschiffs (2) ausgeführt ist, das vom Hauptschiff (1) unabhängig ist und das ein Kraftwerk zur Energieerzeugung (3) umfasst, und wobei
● das Nebenschiff (2) mit einem Mittel für den elektrischen Anschluss (7) ausgestattet ist, um zwischen dem Kraftwerk (3) und dem Hauptschiff (1) eine elektrische Verbindung herzustellen, sowie Mitteln (6a, 6b) zur Verriegelung am Hauptschiff (1), um es bezüglich Bewegungen des Hauptschiffs (1) fest anzukoppeln,
**dadurch gekennzeichnet, dass** das Mittel für den elektrischen Anschluss (7) dafür eingerichtet ist, ein Antriebsmittel (4) des Hauptschiffs (1) mit elektrischer Energie zu versorgen.

2. Modul nach dem vorhergehenden Anspruch, **dadurch gekennzeichnet, dass** das Nebenschiff (2) außerdem ein Antriebsmittel (5) umfasst, das es ihm gestattet, sich unabhängig vom Hauptschiff (1) zu bewegen.

3. Modul nach einem der vorhergehenden Ansprüche, **dadurch gekennzeichnet, dass** das Kraftwerk zur Energieerzeugung (3) ein Kernkraftwerk, ein Gaskraftwerk oder ein Wasserstoffkraftwerk ist.

4. Gruppe von Schiffen, die ein Hauptschiff (1) und ein Nebenschiff (2) umfasst, wobei das Nebenschiff (2) ein Modul nach einem der vorhergehenden Ansprüche ist, **dadurch gekennzeichnet, dass** das Hauptschiff (1) ein Mittel umfasst, um das Nebenschiff (2) aufzunehmen.

5. Gruppe von Schiffen nach dem vorhergehenden Anspruch, **dadurch gekennzeichnet, dass** das Mittel zum Aufnehmen des Nebenschiffs (2) in einem hinteren oder seitlichen Teil des Hauptschiffs angeordnet ist.

6. Gruppe von Schiffen nach einem der Ansprüche 4 oder 5, **dadurch gekennzeichnet, dass** das Hauptschiff (1) einen Behälter umfasst, dessen Form komplementär zur Form des Nebenschiffs (2) ist, und dies derart, dass wenn die Verriegelungsmittel (6a) das Nebenschiff (2) am Hauptschiff (1) verriegeln, das Nebenschiff (2) keine Fläche aufweist, die sich dem Vorwärtskommen der Gruppe von Schiffen widersetzt.

7. Gruppe von Schiffen nach einem der Ansprüche 4 bis 6, **dadurch gekennzeichnet, dass** wenn die Verriegelungsmittel (6a) das Nebenschiff (2) am Hauptschiff (1) verriegeln, das Nebenschiff (2) schwimmend bleibt.

8. Gruppe von Schiffen nach einem der Ansprüche 4 bis 7, **dadurch gekennzeichnet, dass** die Verriegelungsmittel (6a) des Hauptschiffs (1) und Nebenschiffs (2) derart eingerichtet sind, dass wenn die Verriegelungsmittel (6a) das Nebenschiff (2) am Hauptschiff (1) verriegeln, das Nebenschiff (2) vom Hauptschiff (1) gezogen wird.

9. Gruppe von Schiffen nach einem der Ansprüche 4 bis 8, **dadurch gekennzeichnet, dass** das Hauptschiff (1) ein Bodenelement (8) umfasst, das es ihm gestattet, das Nebenschiff (2) in einem inneren Raum (9) aufzunehmen.

10. Gruppe von Schiffen nach einem der Ansprüche 4 bis 9, **dadurch gekennzeichnet, dass** das Hauptschiff (1) ein Zusatzkraftwerk zur Energieerzeugung (11) umfasst, dass dafür vorgesehen ist, das Antriebsmittel (4) des Hauptschiffs (1) in der Freigabekonfiguration zu versorgen, und dies mit einer geringeren Leistung als diejenige des Nebenschiffs (2).

## Claims

1. An electrical power production module for a main ship (1) which can supply a power necessary for propulsion of said main ship (1),
- the module being made in the form of a secondary ship (2) independent of the main ship (1) and comprising a power production plant (3),
- the secondary ship (2) being fitted with electrical connection means (7) for making an electrical connection between the plant(3) and the main ship (1) and locking means (6a, 6b) on the main ship (1) to make it integral with said main ship when moving said main ship (1), **characterised in that** the electrical connection means (7) are adapted to supply the propulsion means (4) of the main ship (1) with electric power.

2. The module as claimed in claim 1, **characterised in that** the secondary ship (2) further comprises propulsion means (5) allowing it to move about independently of the main ship (1).

3. The module as claimed in any one of the claims 1 or 2, **characterised in that** the power production plant (3) is a nuclear plant, a gas plant or a hydrogen plant.

4. An assembly of ships comprising a main ship (1) and a secondary ship (2), said secondary ship (2) being a module as claimed in any one of claims 1 to 3, **characterised in that** the main ship (1) comprises means for receiving the secondary ship (2).

5. The assembly of ships as claimed claim 4, **characterised in that** the means for receiving the secondary ship (2) are located in a rear or lateral part of the main ship (1).

6. The assembly of ships as claimed in any one of Claims 4 or 5, **characterised in that** the main ship (1) comprises a receptacle whereof the form complements the form of the secondary ship (2), so that when the locking means (6a) lock the secondary ship (2) onto the main ship (1), the secondary ship (2) does not present a surface opposing the advance of the assembly of ships.

7. The assembly of ships as claimed in any one of Claims 4 to 6, **characterised in that** when the locking means (6a) lock the secondary ship (2) onto the main ship (1), the secondary ship (2) remains launched.

8. The assembly of ships as claimed in any one of Claims 4 to 7, **characterised in that** the locking means (6a) of the main ship (1) and secondary ship (2) are configured such that when the locking means (6a) lock the secondary ship (2) onto the main ship (1), the secondary ship (2) is pulled by the main ship (1).

9. The assembly of ships as claimed in any one of Claims 4 to 8, **characterised in that** the main ship (1) comprises a invert (8) enabling it to receive the secondary ship (2) in an internal space (9).

10. The assembly of ships as claimed in any one of Claims 4 to 9, **characterised in that** the main ship (1) comprises an additional power production plant (11) designed to supply the propulsion means (4) of the main ship (1) in port, propulsion performance then being substantially less than when said propulsion means (4) of the main ship (1) are supplied by the plant (3) of the secondary ship (2).
